(19) Europäisches Patentamt European Patent Office Office européen des brevets

(11) **EP 4 491 693 A1**

(12) **EUROPEAN PATENT APPLICATION**
published in accordance with Art. 153(4) EPC

(43) Date of publication:
**15.01.2025 Bulletin 2025/03**

(21) Application number: **23766674.8**

(22) Date of filing: **01.03.2023**

(51) International Patent Classification (IPC):
*C09K 9/02* (2006.01)          *C08K 5/101* (2006.01)
*C08K 7/24* (2006.01)          *C08L 101/00* (2006.01)

(52) Cooperative Patent Classification (CPC):
**C08K 5/101; C08K 7/24; C08L 101/00; C09K 9/02**

(86) International application number:
**PCT/JP2023/007600**

(87) International publication number:
**WO 2023/171498 (14.09.2023 Gazette 2023/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.03.2022 JP 2022034605**

(71) Applicant: **Mitsui Chemicals, Inc.
Tokyo 104-0028 (JP)**

(72) Inventor: **YOSHII Hiroaki
Sodegaura-shi, Chiba 299-0265 (JP)**

(74) Representative: **Hoffmann Eitle
Patent- und Rechtsanwälte PartmbB
Arabellastraße 30
81925 München (DE)**

(54) **TEMPERATURE SENSING MATERIAL, MOLDED BODY, AND PRODUCTION METHOD FOR TEMPERATURE SENSING MATERIAL**

(57) The temperature sensing material of the present invention contains 100 parts by mass of a thermoplastic resin (A) having its density, MFR and durometer A hardness in specific ranges, 10 to 100 parts by mass of a compound (B) having a flash point of 155°C or higher, and 1.5 to 20 parts by mass of a porous inorganic compound (C) having an oil absorption of 4.0 g/g or more, in which a content of the compound (B) is more than 200 parts by mass and less than 700 parts by mass relative to 100 parts by mass of the porous inorganic compound (C), and the temperature sensing material has specific optical properties.

EP 4 491 693 A1

**Description**

Technical Field

The present disclosure relates to a temperature sensing material, a molded article, and a production method of the temperature sensing material.

Background Art

A phenomenon of thermochromism that a substance changes its color with a change in temperature, has been known, and a thermochromic material, which is a substance having such a property (thermochromicity), has been known. The thermochromic material has been widely used in a variety of fields.

Patent Literature 1 discloses a technology for detecting a temperature change in the environment using a temperature sensor including a resin composition containing a thermochromic pigment and a solar cell coated with the composition.

Moreover, Patent Literature 2 discloses a technology for determining whether a patch preparation has been patched to an individual, using a patch preparation device including a patch preparation to be patched to an individual having a body temperature, on which a temperature-changing member containing a thermochromic pigment is stacked, and a sensor for detecting a temperature change resulting from having patched the patch preparation to the individual.

Citation List

Patent Literature

    Patent Literature 1: JP6679377B
    Patent Literature 2: JP6847585B

Summary of Invention

Technical Problem

A thermochromic material and a resin composition therewith are required to have high heat resistance depending on their applications, but conventional thermochromic materials, including the thermochromic pigments described in Patent Literatures 1 and 2, have insufficient heat resistance and are difficult to use in applications requiring high heat resistance.

Moreover, when using a thermoplastic resin with high heat resistance, the thermochromic material and the thermoplastic resin may be melt-kneaded at a relatively high temperature, so that the thermochromic material is required to have heat resistance that can withstand a process temperature when melt-kneaded with the resin, however, no thermochromic material that satisfies such heat resistance has been known until now.

Furthermore, the resulting molded article is required to have the property that the thermochromic material does not leak (bleed out) from the thermoplastic resin, as well as embrittlement resistance and light weight properties, for example. However, such considerations have not been studied enough in conventional art.

The present disclosure provides a resin composition that contains a thermochromic material having process heat resistance, which is withstandable even when melt-kneaded at a relatively high temperature and having a property of not leaking (bleeding out) from the resin when molded into a molded article, and that has thermochromicity and can yield a molded article excellent in embrittlement resistance and light weight properties, and a molded article made of the resin composition.

Solution to Problem

The above-described problems can be solved, for example, in the following aspects.

    [1] A temperature sensing material comprising:

        100 parts by mass of a thermoplastic resin (A) satisfying requirements (a-1) to (a-3) below;
        10 to 100 parts by mass of a compound (B) having a flash point of 155°C or higher and being different from the component (A); and

1.5 to 20 parts by mass of a porous inorganic compound (C) having an oil absorption of 4.0 g/g or more; wherein a content of the compound (B) is more than 200 parts by mass and less than 700 parts by mass relative to 100 parts by mass of the porous inorganic compound (C); wherein

when a total light transmittance at 1,600 to 300 nm at a temperature 5°C lower than a phase transition temperature of the compound (B) is T1 (%);

a total light transmittance at 1,600 to 300 nm at a temperature 5°C higher than the phase transition temperature of the compound (B) is T2 (%); and

$$\Delta T = T2 - T1 \ (\%),$$

an average value of $\Delta T$ at 1,600 to 300 nm is 10% or higher, wherein

(a-1) a density as measured in accordance with a method described in ASTM D 1505 is within a range of 0.80 to 1.0 g/cm$^3$;

(a-2) a melt flow rate (MFR) as measured at 230°C with a load of 10 kg in accordance with a method described in ISO 1133 is within a range of 0.1 to 100 g/10 min; and

(a-3) durometer A hardness (momentary value) as measured in accordance with a method described in ISO 7619 is within a range of 50 to 100.

[2] The temperature sensing material according to item [1], wherein the compound (B) is a fatty acid ester.

[3] The temperature-sensing material according to item [2], wherein the fatty acid ester is an ester compound of a monovalent aliphatic carboxylic acid having 10 to 25 carbon atoms and a monovalent aliphatic alcohol having 10 to 25 carbon atoms.

[4] The temperature sensing material according to item [2] or [3], wherein the fatty acid ester is at least one compound selected from the group consisting of stearyl stearate, myristyl myristate, cetyl myristate, and docosyl docosanoate.

[5] The temperature sensing material according to any one of items [1] to [4], wherein a content of the compound (B) relative to 100 parts by mass of the thermoplastic resin (A) is 20 to 70 parts by mass.

[6] The temperature sensing material according to any one of items [1] to [5], wherein an oil absorption of the porous inorganic compound (C) is 4.5 g/g or more and 10.0 g/g or less.

[7] The temperature sensing material according to any one of items [1] to [6], wherein the porous inorganic compound (C) is hydrophobic silica.

[8] The temperature sensing material according to any one of items [1] to [7], wherein a content of the porous inorganic compound (C) relative to 100 parts by mass of the thermoplastic resin (A) is 3 to 16 parts by mass.

[9] A molded article made of the temperature sensing material according to any one of items [1] to [8].

[10] A method for producing the temperature sensing material according to any one of items [1] to [8], comprising a step of kneading the thermoplastic resin (A), the compound (B) and the porous inorganic compound (C) at a temperature of 150°C or higher.

Advantageous Effects of Invention

According to the present disclosure, there can be provided a resin composition that contains a thermochromic material having process heat resistance, which is withstandable even when melt-kneaded at a relatively high temperature and having a property of not leaking (bleeding out) from the resin when molded into a molded article, and that has thermochromicity and can yield a molded article excellent in embrittlement resistance and light weight properties, and a molded article made of the resin composition.

Description of Embodiments

The present disclosure will be described in detail below.

In the present disclosure, the descriptions "XX or more and YY or less" and "XX to YY" representing numerical ranges each refer to a numerical range that includes the endpoints, that is, the lower limit and the upper limit, unless otherwise specified.

Moreover, when numerical ranges are stepwisely described, the upper limit and the lower limit of each numerical range can be arbitrarily combined.

Furthermore, the description of "A and/or B" is a concept that includes the case of A, the case of B, and the case of both A and B.

<Thermoplastic resin (A)>

The thermoplastic resin (A) used in the present disclosure satisfies requirements (a-1) to (a-3) below;

(a-1) A density as measured in accordance with the method described in ASTM D 1505 is within a range of 0.80 to 1.0 g/cm$^3$.
(a-2) A melt flow rate (MFR) as measured at 230°C with a load of 10 kg in accordance with the method described in ISO 1133 is within a range of 0.1 to 100 g/10 min.
(a-3) Durometer A hardness (momentary value) as measured in accordance with the method described in ISO 7619 is within a range of 50 to 100.

The density in requirement (a-1) is preferably 0.81 to 0.97 g/cm$^3$ and more preferably 0.82 to 0.94 g/cm$^3$. When the density of the thermoplastic resin (A) falls within the above range, a molded article excellent in light weight properties can be obtained.

The MFR in requirement (a-2) is preferably 0.5 to 80 g/10 min and more preferably 1 to 50 g/10 min. When the MFR of the thermoplastic resin (A) falls within the above range, moldability of a resin composition obtained is excellent.

The durometer A hardness (momentary value) in requirement (a-3) is preferably 50 to 90, more preferably 50 to 85, and still more preferably 50 to 80. Within the above range of the durometer A hardness (momentary value) of the thermoplastic resin (A), the thermochromic material is less likely to bleed out from the thermoplastic resin.

Although the above-described thermoplastic resin (A) is not particularly limited as long as it is a thermoplastic resin satisfying requirements (a-1) to (a-3) above, examples thereof include an olefin-based resin, a styrene-based resin, an acrylic resin, a polyester-based resin, a polyvinyl chloride-based resin, a polyamide-based resin, a polycarbonate-based resin, a polylactic acid-based resin, a polyimide-based resin, a polysulfone-based resin, and an aromatic polyketone-based resin. These resins can be used singly or in combinations of two or more thereof, and commercially available products may be used. Among the above-described resins, an olefin-based resin is preferable, and an olefin-based thermoplastic elastomer is more preferable.

Preferable examples of the olefin-based thermoplastic elastomer include a dynamically crosslinked body of a polyolefin resin [II] and a copolymer [I] of ethylene, an α-olefin having 3 to 20 carbon atoms, and a non-conjugated polyene (hereinafter, also referred to as the "ethylene/α-olefin/non-conjugated polyene copolymer [I]").

The dynamically crosslinked body may be one obtained by dynamically crosslinking one kind of the ethylene/α-olefin/non-conjugated polyene copolymer [I] and one kind of the polyolefin resin [II] and may be one obtained by dynamically crosslinking multiple kinds of the ethylene/α-olefin/non-conjugated polyene copolymer [I] and multiple kinds of the polyolefin resin [II].

In the present specification, dynamical crosslinking refers to subjecting, to crosslinking reaction, at least part of carbon-carbon double bonds of the ethylene/α-olefin/non-conjugated polyene copolymer [I] by kneading the ethylene/α-olefin/non-conjugated polyene copolymer [I] and the polyolefin resin [II] in a melted state.

- Ethylene/α-olefin/non-conjugated polyene copolymer [I]

The ethylene/α-olefin/non-conjugated polyene copolymer [I] includes a constituent unit (a) derived from ethylene, a constituent unit (b) derived from an α-olefin having 3 to 20 carbon atoms, and a constituent unit (c) derived from a non-conjugated polyene.

A content mole ratio (a)/(b) between the constituent unit (a) and the constituent unit (b) in the ethylene/α-olefin/non-conjugated polyene copolymer [I] is preferably 50/50 to 95/5, more preferably 60/40 to 80/20, and still more preferably 65/35 to 75/25.

On the other hand, a specific amount of the constituent unit (c) derived from a non-conjugated polyene in the ethylene/α-olefin/non-conjugated polyene copolymer [I] is preferably 2 to 20% by mass based on the total amount of the ethylene/α-olefin/non-conjugated polyene copolymer [I].

Specific examples of the α-olefin having 3 to 20 carbon atoms constituting the ethylene/α-olefin/non-conjugated polyene copolymer [I] include propylene, 1-butene, 4-methyl-1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-nonadecene, 1-eicosene, 9-methyl-1-decene, 11-methyl-1-dodecene, and 12-ethyl-1-tetradecene, for example.

Among these, propylene, 1-butene, 4-methyl-1-pentene, 1-hexene, and 1-octene are included. The ethylene/α-olefin/non-conjugated polyene copolymer [I] may include only one kind of the constituent unit (b) derived from the α-olefin and may include two or more kinds thereof.

The non-conjugated polyene constituting the ethylene/α-olefin/non-conjugated polyene copolymer [I] may be a compound having no conjugate structure and having two or more carbon-carbon double bonds. Specific examples thereof include chain non-conjugated dienes such as 1,4-hexadiene, 3-methyl-1,4-hexadiene, 4-methyl-1,4-hexadiene, 5-methyl-1,4-hexadiene, 4,5-dimethyl-1,4-hexadiene, 7-methyl-1,6-octadiene, 8-methyl-4-ethylidene-1,7-nonadiene, and 4-ethylidene-1,7-undecadiene; cyclic non-conjugated dienes such as methyl tetrahydro indene, 5-ethylidene-2-norbornene, 5-methylene-2-norbornene, 5-isopropylidene-2-norbornene, 5-vinylidene-2-norbornene, 6-chloromethyl-5-isopropenyl-2-norbornene, 5-vinyl-2-norbornene, 5-isopropenyl-2-norbornene, 5-isobutenyl-2-norbornene, cyclopentadiene, and norbornadiene; and trienes such as 2,3-diisopropylidene-5-norbornene, 2-ethylidene-3-isopropylidene-5-norbornene, 2-propenyl-2,2-norbornadiene, and 4-ethylidene-8-methyl-1,7-nanodiene.

Among these non-conjugated polyenes, 5-ethylidene-2-norbornene (ENB) and 5-vinyl-2-norbornene (VNB) are particularly preferable. The ethylene/$\alpha$-olefin/non-conjugated polyene copolymer [I] may include only one kind of the constituent unit (c) derived from the non-conjugated polyene and may include two or more kinds thereof.

The ethylene/$\alpha$-olefin/non-conjugated polyene copolymer [I] may be so-called oil extended rubber to which a softening agent, preferably a mineral oil-based softening agent has been added during production thereof. The mineral oil-based softening agent may be a conventionally-known mineral oil-based softening agent, and examples thereof include paraffin-based process oil.

The ethylene/$\alpha$-olefin/non-conjugated polyene copolymer [I] can be produced by a conventionally-known method.

- Polyolefin resin [II]

The polyolefin resin [II] may be a polyolefin-based resin having substantially no unsaturated bond in the main chain thereof. Specific examples thereof include homopolymers of $\alpha$-olefins such as ethylene, propylene, 1-butene, 1-pentene, 1-hexene, 4-methyl-1-pentene, 1-octene, and 1-decene; and copolymers thereof. When the polyolefin resin [II] is a copolymer, it is preferable that the content of any one kind of $\alpha$-olefins be 90 mol% or more.

In particular, a propylene-based polymer (II-1) containing propylene as a main component or an ethylene-based polymer (II-2) containing ethylene as a main component is particularly preferable as the polyolefin resin [II].

Examples of the propylene-based polymer (II-1) include homopolymers of propylene; random copolymers of propylene with an $\alpha$-olefin having 2 to 10 carbon atoms (for example, ethylene, 1-butene, 1-pentene, and 4-methyl-1-pentene); and block copolymers of a propylene homopolymer and an amorphous or low crystalline propylene-ethylene random copolymer, for example. Provided that, it is preferable that the amount of constituent units other than propylene be 10 mol% or less based on the total amount of constituent units.

The propylene-based polymer (II-1) may be a polymer polymerized by a known polymerization method and may be a polymer produced and sold as polypropylene resin.

Furthermore, although the propylene-based polymer (II-1) preferably has an isotactic steric structure, the propylene-based polymer (II-1) may have a syndiotactic structure or a mixed structure thereof, or a structure partially including an atactic structure.

On the other hand, examples of the ethylene-based polymer (II-2) include ethylene homopolymers; and random copolymers of ethylene with an $\alpha$-olefin having 3 to 10 carbon atoms (for example, propylene, 1-butene, 1-pentene, and 4-methyl-1-pentene). In the ethylene-based polymer (II-2), it is preferable that the amount of constituent units other than ethylene be 10 mol% or less based on the total amount of constituent units.

The ethylene-based polymer (II-2) may be a polymer polymerized by a known polymerization method and may be a polymer produced and sold as high pressure low density polyethylene, linear low density polyethylene, and high density polyethylene, for example.

- Method for preparing dynamically crosslinked body

The dynamically crosslinked body can be prepared by kneading (dynamically crosslinking) the ethylene/$\alpha$-olefin/non-conjugated polyene copolymer [I] and the polyolefin resin [II] described above, with a known crosslinking agent, a crosslinking aid, and a softening agent added thereto as needed. Commercially available products may also be used. While either a non-open-type device or an open-type device may be used for dynamic crosslinking, a non-open-type device is preferably used.

Dynamic crosslinking is preferably carried out in an inert gas atmosphere such as nitrogen and carbon dioxide gas. A temperature at which dynamic crosslinking is carried out usually ranges from a melting point of the polyolefin resin [II] to 300°C, preferably from 150°C to 270°C, and more preferably from 170°C to 250°C. A kneading time is preferably from 1 to 20 minutes and more preferably from 1 to 10 minutes. Shearing speed at this time is preferably 10 to 50,000 sec$^{-1}$ and more preferably 100 to 20,000 sec$^{-1}$.

Examples of kneading devices used for dynamic crosslinking include mixing rolls, intensive mixers (for example, a Banbury mixer and a kneader), and single or twin screw extruders, for example, a non-open-type device is preferable, and a twin screw extruder is particularly preferable.

<Compound (B)>

The compound (B) used in the present disclosure is used as a thermochromic material and is a compound having a flash point of 155°C or higher, preferably 156°C or higher and 300°C or lower, more preferably 157°C or higher and 290°C or lower, and still more preferably 158°C or higher and 280°C or lower (provided that the compound (B) is a compound other than the component (A)). Within the above range of the flash point, the compound (B) can be contained in a resin composition without thermal decomposition even when melt-kneaded with, for example, the component (A) at a high temperature of 150°C or higher, as a result of which the compound (B) can exhibit excellent thermochromicity.

A phase transition temperature of the compound (B) is preferably 30 to 100°C and more preferably 25 to 75°C. Within the above range of the phase transition temperature, the compound (B) can be contained in a resin composition without thermal decomposition even when melt-kneaded with, for example, the component (A), at a high temperature of 150°C or higher, making it possible to exhibit excellent thermochromicity.

An example of the compound (B) as described above includes a compound having, for example, a non-bulky chain structure that does not contain a ring or multiple bond, a structure with a hydrocarbon, or a structure having a hydrogen bonding unit such as a carbonyl group or a hydroxyl group. More specific examples of the compound (B) include fatty acid esters, aliphatic alcohols, and fatty acids, for example, and fatty acid esters are preferable, and a fatty acid ester in which substituents on both ester terminals are chain-like is more preferable, among them.

The fatty acid ester is preferably an ester compound of a monovalent aliphatic carboxylic acid having 10 to 25 carbon atoms and a monovalent aliphatic alcohol having 10 to 25 carbon atoms. The aliphatic alcohol more preferably has 20 to 25 carbon atoms. The fatty acid more preferably has 20 to 25 carbon atoms.

Specific examples of the fatty acid esters include, for example, isocetyl myristate, octyldodecyl myristate, isocetyl isostearate, cetyl 2-ethylhexanoate, methyl stearate, isocetyl stearate, 2-ethylhexyl palmitate, isotridecyl stearate, butyl stearate, dodecyl stearate, myristyl myristate, cetyl myristate, methyl palmitate, hexadecyl palmitate, stearyl stearate, and docosyl docosanoate. Among them, stearyl stearate, myristyl myristate, cetyl myristate, and docosyl docosanoate are preferable. The compounds (B) that are these fatty acid esters have an appropriate refractive index and can exhibit favorable thermochromicity.

The compounds (B) can be selected as appropriate according to the desired thermochromicity, and may be used singly or combined for use with two or more thereof.

<Porous inorganic compound (C)>

An oil absorption of the porous inorganic compound (C) used in the present disclosure is 4.0 g/g or more, preferably 4.5 g/g or more and 10.0 g/g or less, more preferably 5.0 g/g or more and 9.5 g/g or less, and still more preferably 5.0 g/g or more and 9.0 g/g or less. The porous inorganic compound (C) having an oil absorption within the above range can retain a larger amount of the compound (B), making it possible for the compound (B) to be inhibited from leaking, i.e. bleeding out, from the resin when a molded article is formed.

An average particle diameter of the porous inorganic compound (C) is preferably 1 um or more and 100 um or less. When the average particle diameter of the porous inorganic compound (C) falls within the above range, the above-described effects are enhanced. The average particle diameter is a value measured with a device and an analysis method suitable for particle diameters, and a value measured by a laser diffraction/scattering method, for example.

The porous inorganic compound (C) is not particularly limited as long as it has the above oil absorption; however, in view of having excellent heat resistance, examples thereof include silica, alumina, and carbon. These may be used singly or in combinations of two or more thereof. Among the compounds described above, preferred is silica, and more preferred is hydrophobic silica from the viewpoint of enhancing the oil absorption effect, refractive index, and thermochromicity.

When temperature reaches or exceeds the melting point (melting peak temperature) of the compound (B) while the porous inorganic compound (C) retains the compound (B), the porous inorganic compound (C) is preferably a compound in which the retained compound (B) is less likely to volatilize and less likely to ignite, compared to the compound (B) which is present alone. Examples of such preferred porous inorganic compounds (C) include, for example, "AEROS" manufactured by Thilium Co., Ltd., and " Airlica" manufactured by Tokuyama Corporation.

<Composition>

For the content of each component in the resin composition of the present disclosure,

the content of the compound (B) is 10 to 100 parts by mass, preferably 20 to 70 parts by mass, and more preferably 30 to 50 parts by mass,
and the content of the porous inorganic compound (C) is 1.5 to 20 parts by mass, preferably 3 to 16 parts by mass, and more preferably 7 parts by mass or more and less than 14 parts by mass, relative to 100 parts by mass of the thermoplastic resin (A).

Also, the content of the compound (B) is more than 200 parts by mass and less than 700 parts by mass, preferably 250 to 670 parts by mass, and more preferably 300 to 650 parts by mass relative to 100 parts by mass of the porous inorganic compound (C).

Each component satisfying the above conditions of the respective content when formed into a molded article, enables providing a molded article in which the compound (B) does not leak out of a resin (does not bleed out), having sufficient thermochromicity, and having excellent embrittlement resistance and light weight properties.

<Optional components>

The resin composition of the present disclosure may contain, in addition to the above-described components (A) to (C), an additive as an optional component, such as a slip agent, a nucleating agent, a filler, an antioxidant, a weather stabilizer, colorants (including thermochromic materials other than the compound (B)), a foaming agent, pigments, dyes, an antistatic agent, or a flame retardant, to the extent that the effects of the present disclosure are not impaired.

<Optical properties>

The resin composition of the present disclosure has an average value of $\Delta T$ at 1,600 to 300 nm of 10% or higher, preferably 20 to 60%, and more preferably 25 to 50%,

when a total light transmittance at 1,600 to 300 nm at a temperature 5°C lower than a phase transition temperature of the compound (B) is T1 (%);
a total light transmittance at 1,600 to 300 nm at a temperature 5°C higher than the phase transition temperature of the compound (B) is T2 (%); and

$$\Delta T = T2 - T1 \ (\%).$$

Satisfying the requirement enables obtaining the desired thermochromicity.

<Resin composition production method>

A method for producing the resin composition of the present disclosure includes a step of kneading the thermoplastic resin (A), the compound (B), the porous inorganic compound (C), and any optional components, if necessary, at a temperature of 150°C or higher, preferably 152°C or higher and 300°C or lower, and more preferably 154°C or higher and 260°C or lower. A kneading time is usually 1 to 20 minutes and preferably 1 to 10 minutes.

A mixing roll, an intensive mixer (for example, a Banbury mixer or a kneader), and a single or twin screw extruder, can be used as a kneading device, for example, and a non-open-type device is preferable.

[Molded article]

The molded article of the present disclosure is made of the resin composition of the present disclosure described above. Various known methods can be employed as a molding method. Specifically, extrusion, press molding, injection molding, calendering, and blow molding are exemplified. In addition, a molded article such as a sheet obtained through the above-described molding method can also be subjected to fabrication by, for example, thermoforming, or can be laminated with another material to form a molded article.

Use of the molded article of the present disclosure is not particularly limited, but the molded article is suitable for a variety of well-known uses, such as automobile parts, civil engineering and building materials, electrical and electronic components, daily necessities, sanitary products, films and sheets, and foams. In particular, since the molded article can block or transmit ultraviolet rays or near-infrared rays as desired by taking advantage of its thermochromicity, the molded article is useful as sensor materials.

Examples

The present disclosure will be described in more detail below based on Examples, but the present disclosure is not limited to these examples.

[Materials]

Components for the resin compositions produced in Examples and Comparative Examples are as follows. Hereinafter, a thermoplastic resin, a compound, and a porous inorganic compound, which do not correspond to the thermoplastic resin (A), the compound (B), and the porous inorganic compound (C) in the present disclosure are distinguished by symbols (A'), (B'), and (C'), respectively.

<Thermoplastic resin (A) or (A')>

- A-1: "Milastomer 6010NST" (a crosslinked-type thermoplastic elastomer mainly containing olefin-based rubber (EPT) and olefin-based resin (PP); density: 0.88 g/cm$^3$; MFR (230°C, load 10 kg): 12 g/10 min; durometer A hardness (momentary value): 70) manufactured by Mitsui Chemicals, Inc.
- A-2: "Tafmer PN3560" (polyolefin-based thermoplastic elastomer; density: 0.87 g/cm$^3$; MFR (230°C, load 10 kg): 28 g/10 min; durometer A hardness (momentary value): 72) manufactured by Mitsui Chemicals, Inc.
- A'-3: "DYNARON 8600P" (styrene·ethylenebutylene·styrene block polymer; density: 0.90 g/cm$^3$; MFR (230°C, load 10 kg): 140 g/10 min; durometer A hardness (momentary value): 48) manufactured by JSR Corporation.
- A'-4: Polyvinyl chloride (density: 1.2 g/cm$^3$; durometer A hardness (momentary value): 70).

<Compound (B) or (B') (thermochromic material)>

- B-1: "Exceparl SS" (stearyl stearate; flash point: 258°C; phase transition temperature: 54°C) manufactured by Kao Corporation.
- B-2: "Exceparl MY-M" (myristyl myristate; flash point: 239°C; phase transition temperature: 40°C) manufactured by Kao Corporation.
- B-3: "Spermaceti" (cetyl myristate; flash point: 228°C; phase transition temperature: 47°C) manufactured by NOF CORPORATION.
- B-4: "UNISTER M-2222SL" (docosyl docosanoate; flash point: 270°C; phase transition temperature: 68°C) manufactured by NOF CORPORATION.
- B'-5: "Octadecane" (flash point: 154°C; phase transition temperature: 28°C) manufactured by FUJIFILM Wako Pure Chemical Corporation.
- B'-6: Melamine capsule "PMCD-28SP" (flash point: 160°C; phase transition temperature: 28°C) manufactured by Mikiriken Industrial Co., Ltd.

<Porous inorganic material (C) or (C')>

- C-1: Hydrophobic silica ("AEROS" manufactured by THILIUM Co., Ltd., oil absorption; 7 g/g)
- C'-2: Activated carbide ("Sumiley" manufactured by TANIGUCHI SHOKAI Inc., oil absorption; 3.4 g/g)

[Examples 1 to 7 and Comparative Examples 1 to 14]

The thermoplastic resin (A) or (A'), the compound (B) or (B') (thermochromic material), and the porous inorganic material (C) or (C') in the amounts (parts by mass) shown in Tables 1 and 2 were kneaded for 5 minutes using a Labo Plastomill ("80C100" manufactured by Toyo Seiki Seisaku-sho, Ltd.) at a temperature of 240°C and a torque rotation speed of 30 rpm. The kneaded product was promptly collected after kneading. The obtained kneaded product was cut, with scissors, into small pieces of about 0.5 cm × 0.5 cm × 0.5 cm.

A Teflon (R) sheet and a mold were sequentially placed on a stainless steel plate (hereinafter, also referred to as a "SUS plate"), and the hole part of the mold was paved with the cut pieces as obtained above. After paving the mold with the cut pieces, a Teflon (R) sheet and a SUS plate were sequentially stacked thereon. The Teflon (R) sheets were used so that the kneaded product did not attach to the SUS plates through hot pressing. Molds with a length of 6.5 cm, a width of 6.5 cm, and different three thicknesses (1 mm, 2 mm, and 5 mm) were used as the above mold.

The obtained stacked product was hot pressed at a temperature of 240°C and a pressure of 10 MPa for five minutes with a compression molding machine ("ASF-10" manufactured by Sinto Metal Industries, Ltd.). Thereafter, the stacked product was promptly moved to a compression molding machine ("NSF-37" manufactured by Sinto Metal Industries, Ltd.) in the state of being sandwiched by the SUS plates, and cooled at a pressure of 10 MPa for five minutes. After cooling, the SUS plates and the Teflon (R) sheets were removed from the mold to obtain hot-pressed sheet samples having the thickness shown in Tables 1 and 2. The produced hot-pressed sheet samples were subjected to the following evaluations.

<Bleed-out>

The upper side and the lower side of each of the hot-pressed sheet samples obtained above were sandwiched by clean paper such that the surface of 6.5 cm × 6.5 cm and the clean paper became parallel, and the upper side and the lower side thereof were further sandwiched by SUS plates, followed by hot pressing under conditions with a temperature of 100°C and a pressure of 10 MPa for five minutes with a compression molding machine ("ASF-10" manufactured by Sinto Metal Industries, Ltd.). After hot pressing, the hot-pressed sheet sample was promptly peeled from the clean paper. The condition of the clean paper was checked and rated as "○: without leakage" when no trace was found in the area in which the sheet was placed and as "X: with leakage" when a trace was found.

<Embrittlement resistance>

Each of the hot-pressed sheet samples obtained above was cut into a test piece for a tensile test having a size with a length of 1.0 cm and a width of 6.5 cm, and the tensile elongation of the test piece was measured under the conditions with a tensile speed of 300 mm/minute and a distance between chucks of 50 mm using TENSILON universal testing machine (model: RTG-1225). The tensile elongation value obtained when the test piece was broken was evaluated according to the following criteria on the basis of the measured elongation rate, with elongation rate (%) = elongation value (mm)/distance between chucks (mm).

> ○: greater than 10%
> Δ: 5% to 10%
> X: less than 5%

<Light weight properties>

The weight of each of the hot-pressed sheet samples obtained above was measured with a precision balance, and a value obtained by dividing the weight by the volume of the obtained hot-pressed sheet was taken as the density thereof. Evaluation was made according to the following criteria on the basis of the obtained density values.

> ○: less than 0.9 $g/cm^3$
> Δ: 0.9 $g/cm^3$ or more and less than 1 $g/cm^3$
> X: 1 $g/cm^3$ or more

<Transmittance>

The transmission spectrum of each of the hot-pressed sheet samples obtained above was measured using an ultraviolet-visible-near infrared spectrophotometer "UH4150" (manufactured by Hitachi High-Tech Science Corporation).
When the transmittance at 1,600 to 300 nm at a temperature 5°C lower than the phase transition temperature of the compound (B) or (B') is T1 (%), and the transmittance at 1,600 to 300 nm at a temperature 5°C higher than the phase transition temperature of the compound (B) or (B') is T2 (%), ΔT = T2 - T1 (%), and evaluation was made based on the following criteria.

> ○: the average value of ΔT at 1,600 to 300 nm is 20% or more.
> Δ: the average value of ΔT at 1,600 to 300 nm is 10% or more and less than 20%.
> X: the average value of ΔT at 1,600 to 300 nm is less than 10%.

<Comprehensive evaluation>

Those rated as X in at least one of the above evaluations were rated as X (unsuitable) in comprehensive evaluation.

[Table 1]

| | | | Example | | | | | | | Comparative Example | | | |
|---|---|---|---|---|---|---|---|---|---|---|---|---|---|
| | | | 1 | 2 | 3 | 4 | 5 | 6 | 7 | 1 | 2 | 3 | 4 |
| Composition (parts by mass) | Thermoplastic resin (A) or (A') | A-1 | 100 | 100 | 100 | 100 | 100 | 0 | 100 | 100 | 100 | 100 | 100 |
| | | A-2 | 0 | 0 | 0 | 0 | 0 | 100 | 0 | 0 | 0 | 0 | 0 |
| | | A'-3 | 0 | 0 | 0 | 0 | 0 | 0 | 0 | 0 | 0 | 0 | 0 |
| | | A'-4 | 0 | 0 | 0 | 0 | 0 | 0 | 0 | 0 | 0 | 0 | 0 |
| | Compound (B) or (B') | B-1 | 42 | 0 | 0 | 0 | 0 | 42 | 21 | 42 | 42 | 0 | 42 |
| | | B-2 | 0 | 42 | 0 | 0 | 0 | 0 | 0 | 0 | 0 | 0 | 0 |
| | | B-3 | 0 | 0 | 42 | 0 | 42 | 0 | 0 | 0 | 0 | 0 | 0 |
| | | B-4 | 0 | 0 | 0 | 42 | 0 | 0 | 0 | 0 | 0 | 0 | 0 |
| | | B'-5 | 0 | 0 | 0 | 0 | 0 | 0 | 0 | 0 | 0 | 0 | 0 |
| | | B'-6 | 0 | 0 | 0 | 0 | 0 | 0 | 0 | 0 | 0 | 0 | 0 |
| | Porous inorganic compound (C) or (C') | C-1 | 7 | 7 | 7 | 7 | 13 | 7 | 3.5 | 6 | 21 | 0 | 0 |
| | | C'-2 | 0 | 0 | 0 | 0 | 0 | 0 | 0 | 0 | 0 | 0 | 0 |
| | B or B'C or C' 100 parts by mass | | 600 | 600 | 600 | 600 | 323 | 600 | 600 | 700 | 200 | - | - |
| | B or B' + C or C'/composition | | 33 | 33 | 33 | 33 | 35 | 33 | 20 | 32 | 39 | 0 | 30 |
| Design | Sheet thickness (mm) | | 1 | 1 | 1 | 1 | 1 | 1 | 1 | 1 | 1 | 1 | 1 |
| Evaluation results on hot-pressed product | Bleed out | | ○ | ○ | ○ | ○ | ○ | ○ | ○ | X | ○ | ○ | X |
| | Embrittlement resistance | | ○ | ○ | ○ | ○ | △ | ○ | ○ | ○ | X | ○ | ○ |
| | Light weight properties | | ○ | ○ | ○ | ○ | ○ | ○ | ○ | ○ | ○ | ○ | ○ |
| | ΔT (T2-T1) (%) | | 31 | 30 | 30 | 31 | 30 | 31 | 19 | 30 | 28 | 0 | 32 |
| | Evaluation | | ○ | ○ | ○ | ○ | ○ | ○ | △ | ○ | ○ | X | ○ |
| Comprehensive evaluation | | | ○ | ○ | ○ | ○ | ○ | ○ | ○ | X | X | X | X |

[Table 2]

| | | | Comparative Example | | | | | | | | | |
|---|---|---|---|---|---|---|---|---|---|---|---|---|
| | | | 5 | 6 | 7 | 8 | 9 | 10 | 11 | 12 | 13 | 14 |
| Composition (parts by mass) | Thermoplastic resin (A) or (A') | A-1 | 100 | 100 | 100 | 100 | 100 | 0 | 0 | 0 | 100 | 100 |
| | | A-2 | 0 | 0 | 0 | 0 | 0 | 0 | 0 | 0 | 0 | 0 |
| | | A'-3 | 0 | 0 | 0 | 0 | 0 | 100 | 0 | 0 | 0 | 0 |
| | | A'-4 | 0 | 0 | 0 | 0 | 0 | 0 | 100 | 100 | 0 | 0 |
| | Compound (B) or (B') | B-1 | 42 | 42 | 26 | 25 | 11 | 42 | 42 | 50 | 0 | 0 |
| | | B-2 | 0 | 0 | 0 | 0 | 0 | 0 | 0 | 0 | 0 | 0 |
| | | B-3 | 0 | 0 | 0 | 0 | 0 | 0 | 0 | 0 | 0 | 0 |
| | | B-4 | 0 | 0 | 0 | 0 | 0 | 0 | 0 | 0 | 0 | 0 |
| | | B'-5 | 0 | 0 | 0 | 0 | 0 | 0 | 0 | 0 | 42 | 0 |
| | | B'-6 | 0 | 0 | 0 | 0 | 0 | 0 | 0 | 0 | 0 | 42 |
| | Porous inorganic compound (C) or (C') | C-1 | 0 | 0 | 0 | 0 | 0 | 7 | 7 | 8.4 | 7 | 0 |
| | | C'-2 | 20 | 21 | 13 | 12.5 | 5.5 | 0 | 0 | 0 | 0 | 0 |
| | B or B7C or C' 100 parts by mass | | 210 | 200 | 200 | 200 | 200 | 600 | 600 | 595 | 600 | - |
| | B or B' + C or C'/composition | | 38 | 39 | 28 | 27 | 14 | 33 | 33 | 37 | 33 | 30 |
| Design | Sheet thickness (mm) | | 1 | 1 | 1 | 1 | 1 | 1 | 1 | 1 | Unproducible | |
| Evaluation results on hot-pressed product | Bleed out | | X | ○ | ○ | ○ | ○ | X | X | X | - | - |
| | Embrittlement resistance | | X | X | X | X | ○ | ○ | ○ | ○ | - | - |
| | Light weight properties | | ○ | ○ | ○ | ○ | ○ | ○ | X | △ | - | - |
| | ΔT (T2-T1) | (%) | 0 | 0 | 0 | 0 | 0 | 29 | 30 | 30 | - | - |
| | | Evaluation | X | X | X | X | X | ○ | ○ | ○ | - | - |
| Comprehensive evaluation | | | X | X | X | X | X | X | X | X | X | X |

Incidentally, in Comparative Examples 13 and 14, the hot-pressed sheet samples could not be produced due to smoke generated from the compound (B) upon production of hot-pressed sheet sample, and therefore could not be evaluated, so that those in Comparative Examples 13 and 14 were also rated as "X" in the comprehensive evaluation.

**Claims**

1. A temperature sensing material comprising:

   100 parts by mass of a thermoplastic resin (A) satisfying requirements (a-1) to (a-3) below;
   10 to 100 parts by mass of a compound (B) having a flash point of 155°C or higher and being different from the component (A); and
   1.5 to 20 parts by mass of a porous inorganic compound (C) having an oil absorption of 4.0 g/g or more; wherein a content of the compound (B) is more than 200 parts by mass and less than 700 parts by mass relative to 100 parts by mass of the porous inorganic compound (C); wherein
   when a total light transmittance at 1,600 to 300 nm at a temperature 5°C lower than a phase transition temperature of the compound (B) is T1 (%);
   a total light transmittance at 1,600 to 300 nm at a temperature 5°C higher than the phase transition temperature of the compound (B) is T2 (%); and

$$\Delta T = T2 - T1 \ (\%),$$

   an average value of $\Delta T$ at 1,600 to 300 nm is 10% or higher, wherein

   (a-1) a density as measured in accordance with a method described in ASTM D 1505 is within a range of 0.80 to 1.0 g/cm$^3$;
   (a-2) a melt flow rate (MFR) as measured at 230°C with a load of 10 kg in accordance with a method described in ISO 1133 is within a range of 0.1 to 100 g/10 min; and
   (a-3) durometer A hardness (momentary value) as measured in accordance with a method described in ISO 7619 is within a range of 50 to 100.

2. The temperature sensing material according to claim 1, wherein the compound (B) is a fatty acid ester.

3. The temperature sensing material according to claim 2, wherein the fatty acid ester is an ester compound of a monovalent aliphatic carboxylic acid having 10 to 25 carbon atoms and a monovalent aliphatic alcohol having 10 to 25 carbon atoms.

4. The temperature sensing material according to claim 2 or 3, wherein the fatty acid ester is at least one compound selected from the group consisting of stearyl stearate, myristyl myristate, cetyl myristate, and docosyl docosanoate.

5. The temperature sensing material according to any one of claims 1 to 4, wherein a content of the compound (B) relative to 100 parts by mass of the thermoplastic resin (A) is 20 to 70 parts by mass.

6. The temperature sensing material according to any one of claims 1 to 5, wherein an oil absorption of the porous inorganic compound (C) is 4.5 g/g or more and 10.0 g/g or less.

7. The temperature sensing material according to any one of claims 1 to 6, wherein the porous inorganic compound (C) is hydrophobic silica.

8. The temperature sensing material according to any one of claims 1 to 7, wherein a content of the porous inorganic compound (C) relative to 100 parts by mass of the thermoplastic resin (A) is 3 to 16 parts by mass.

9. A molded article made of the temperature sensing material according to any one of claims 1 to 8.

10. A method for producing the temperature sensing material according to any one of claims 1 to 8, comprising a step of kneading the thermoplastic resin (A), the compound (B) and the porous inorganic compound (C) at a temperature of 150°C or higher.

## INTERNATIONAL SEARCH REPORT

International application No.

**PCT/JP2023/007600**

### A. CLASSIFICATION OF SUBJECT MATTER

*C09K 9/02*(2006.01)i; *C08K 5/101*(2006.01)i; *C08K 7/24*(2006.01)i; *C08L 101/00*(2006.01)i
FI: C09K9/02 C; C08L101/00; C08K7/24; C08K5/101

According to International Patent Classification (IPC) or to both national classification and IPC

### B. FIELDS SEARCHED

Minimum documentation searched (classification system followed by classification symbols)

C09K9/02; C08K5/101; C08K7/24; C08L101/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| A | WO 2013/061814 A1 (PILOT CORP) 02 May 2013 (2013-05-02) claims, examples, etc. | 1-10 |
| A | JP 2016-117863 A (PILOT CORP) 30 June 2016 (2016-06-30) claims, examples, etc. | 1-10 |
| A | JP 3-222794 A (OKI ELECTRIC IND CO LTD) 01 October 1991 (1991-10-01) claims, examples, etc. | 1-10 |
| A | JP 3-169590 A (OKI ELECTRIC IND CO LTD) 23 July 1991 (1991-07-23) claims, examples, etc. | 1-10 |
| A | JP 5-24348 A (OKI ELECTRIC IND CO LTD) 02 February 1993 (1993-02-02) claims, examples, etc. | 1-10 |
| A | WO 93/07004 A1 (FUJITSU LTD) 15 April 1993 (1993-04-15) claims, examples, etc. | 1-10 |
| A | JP 2018-58050 A (TOYOTA MOTOR CORP) 12 April 2018 (2018-04-12) claims, examples, etc. | 1-10 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **01 May 2023** | **16 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/007600**

| Patent document cited in search report | Publication date (day/month/year) | Patent family member(s) | Publication date (day/month/year) |
|---|---|---|---|
| WO 2013/061814 A1 | 02 May 2013 | US 2014/0291585 A1 claims, examples, etc. EP 2772523 A1 CN 103998569 A | |
| JP 2016-117863 A | 30 June 2016 | (Family: none) | |
| JP 3-222794 A | 01 October 1991 | (Family: none) | |
| JP 3-169590 A | 23 July 1991 | US 5157011 A claims, examples, etc. EP 429010 A2 | |
| JP 5-24348 A | 02 February 1993 | (Family: none) | |
| WO 93/07004 A1 | 15 April 1993 | EP 560986 A1 claims, examples, etc. | |
| JP 2018-58050 A | 12 April 2018 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6679377 B
- JP 6847585 B